(19) Europäisches Patentamt

European Patent Office

Office européen des brevets

(11) **EP 1 736 220 A1**

(12) **EUROPEAN PATENT APPLICATION**

(43) Date of publication:
**27.12.2006 Bulletin 2006/52**

(51) Int Cl.:
***B01D 39/20*** (2006.01)   ***F01N 3/28*** (2006.01)

(21) Application number: **05113035.9**

(22) Date of filing: **28.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **24.06.2005 WOPCT/JP2005/011665**

(71) Applicant: **IBIDEN CO., LTD.**
**Ogaki-shi, Gifu-ken 503-8604 (JP)**

(72) Inventors:
• **Ohno, Kazushige**
**Ibiden Co., Ltd.**
**Ibi-gun Gifu 501-0695 (JP)**

• **Ogyu, Kazutake**
**Ibiden Co., Ltd.**
**Ibi-gun Gifu 501-0695 (JP)**
• **Kunieda, Masafumi**
**Ibiden Co., Ltd.**
**Ibi-gun Gifu 501-0695 (JP)**

(74) Representative: **Hart Davis, Jason et al**
**Cabinet Beau de Loménie,**
**158, rue de l'Université**
**75340 Paris Cedex 07 (FR)**

(54) **Honeycomb structured body**

(57)     An object of the present invention is to provide a flat-shaped honeycomb structured body in which sealing material layers are hardly damaged during use and in which adhesion strength can be maintained. The honeycomb structured body of the present invention is a honeycomb structured body including: a honeycomb block which has a flat-shaped cross section and has a structure in which plural honeycomb units are bonded to one another through sealing material layers, each unit including as a main component a porous ceramic and having in the longitudinal direction a number of cells placed in parallel with a cell wall therebetween; and a sealing material layer provided on an outer peripheral portion of the honeycomb block. Herein, each honeycomb unit contains inorganic fibers and/or whiskers in addition to inorganic particles, and the sealing material layer between the honeycomb units on the cross section perpendicular to the longitudinal direction is formed such that the direction thereof is diagonal to the major axis of a shape constituting the contour of the cross section.

Fig. 1

Printed by Jouve, 75001 PARIS (FR)

EP 1 736 220 A1

**Description**

TECHNICAL FIELD

The present invention relates to a honeycomb structured body used as a catalyst support and the like.

BACKGROUND ART

Conventionally, a honeycomb catalyst generally used for exhaust gas conversion of an automobile is manufactured by supporting a high specific surface area material such as active alumina and the like and a catalyst metal such as platinum and the like on a surface of a cordierite-based honeycomb structured body that has an integral structure and a low thermal expansion property. Moreover, an alkaline earth metal such as Ba and the like is supported thereon as a NOx occlusion agent, so as to be used for treating NOx in an atmosphere with excessive oxygen such as an atmosphere in a lean burn engine and a diesel engine.

Here, in order to improve the converting performance, it is necessary to increase the possibility of contact between exhaust gases and the catalyst noble metal as well as the NOx occlusion agent. For this purpose, it is necessary for the support to have a higher specific surface area and for the noble metal to have a smaller grain size and to be dispersed in a high level. However, merely increasing the supporting amount of the high specific surface area material, such as active alumina and the like, may only cause an increase in the thickness of the alumina layer, failing to make the possibility of contact higher, and leading to a problem that a pressure loss becomes too high; therefore, the cell shape, the cell density, the thickness of cell walls, and the like have been devised (for example, see JP-A 10-263416).

With respect to the honeycomb structured body made of a high specific surface area material, a honeycomb structured body that has been subjected to extrusion molding together with inorganic fibers and an inorganic binder has been known (for example, see JP-A 5-213681).

In the high specific surface area material such as alumina and the like, however, sintering is progressed and the specific surface area is reduced when subjected to thermal aging, and accordingly, the catalyst metal such as platinum and the like supported thereon comes to aggregate and a grain size becomes larger while a specific surface area is reduced. In other words, in order to ensure a higher specific surface area even after the thermal aging, the specific surface area needs to be increased in its initial stage. Moreover, as described above, in order to improve the converting performance, it is necessary to increase the possibility of contact between exhaust gases and the catalyst noble metal as well as the NOx occlusion agent. In other words, it is important to make the particles of the catalyst metal smaller so that they can be dispersed in a higher level, and further so that the support is made to have a higher specific surface area; however, in such a case disclosed in JP-A 10-263416; a high specific surface area material such as active alumina and the like and a catalyst metal such as platinum and the like are supported on the surface of a cordierite-based honeycomb structured body, the cell shape, the cell density, and the wall thickness and the like thereof have been devised to increase the possibility of contact with exhaust gases so that the catalyst support has a higher specific surface area; however, the resulting possibility of contact is not sufficiently large, thereby failing to disperse the catalyst metal sufficiently in a high level, and being insufficient, after the thermal aging, in converting performance for exhaust gases. The term "thermal aging" refers to both the thermal aging due to heat supplied when the honeycomb structured body is used as a catalyst support, and the thermal aging due to heat supplied by an accelerated test or the like.

In order to make up for this insufficiency and solve the problem, a large amount of the catalyst metal was supported or the catalyst support itself was allowed to have a larger size. However, noble metal such as platinum and the like is very expensive and a valuable limited resource. Moreover, upon installing in an automobile, since the installation space is very much restricted, both of the above-mentioned means fail to provide an appropriate means.

In the honeycomb structured body disclosed in JP-A 5-213681 in which the high specific surface material is subjected to extrusionmolding together with inorganic fibers and an inorganic binder, since the base member itself is made of the high specific surface material, the resulting support also has a high specific surface area and can disperse the catalyst metal sufficiently in a high level; however, in order to maintain an appropriate specific surface area, the alumina and the like in the base member can not be sufficiently sintered, thereby making the base member very poor in strength.

Moreover, when applying to an automobile as described above, the installation space is extremely limited. For this reason, a means for thinning the cell wall, and means of the like is taken so as to increase the specific surface area of the support per unit volume; however, such means make the base member further poor in strength. Furthermore, since alumina and the like are high in coefficient of thermal expansion, cracks easily occur due to a thermal stress which occurs at the time of firing (calcination) and during use. From these points of view, when applied to an automobile, the honeycomb structured body of this type cannot maintain a proper shape as the honeycomb structured body, and properly function as a catalyst support since it is easily broken by an external force such as a thermal stress due to an abrupt temperature change and great vibrations which occur during use.

As the honeycomb structured body used for converting exhaust gases, the following has been known: a honeycomb structured body in which plural honeycomb units are bonded to one another through sealing material layers to form a honeycomb block, each unit mainly composed of a porous ceramic made of silicon carbide, and having in the longitudinal direction a large number of cells placed in parallel with a cell wall therebetween, thereafter a sealing material layer being formed on the outer peripheral portion of the honeycomb block.

Most of the honeycomb structured body of this type are round in the cross-sectional shape perpendicular to the longitudinal direction; however, in recent years, honeycomb structured bodies having various shapes in the cross-section perpendicular to the longitudinal direction, for example, a racetrack shape, an elliptical shape, an almost triangular shape, an almost trapezoidal shape and the like, have also been proposed (for example, see JP-A 2002-273130, JP-A 2003-260322, WO 03/078026 A1 and JP-A 2003-181233 and the like).

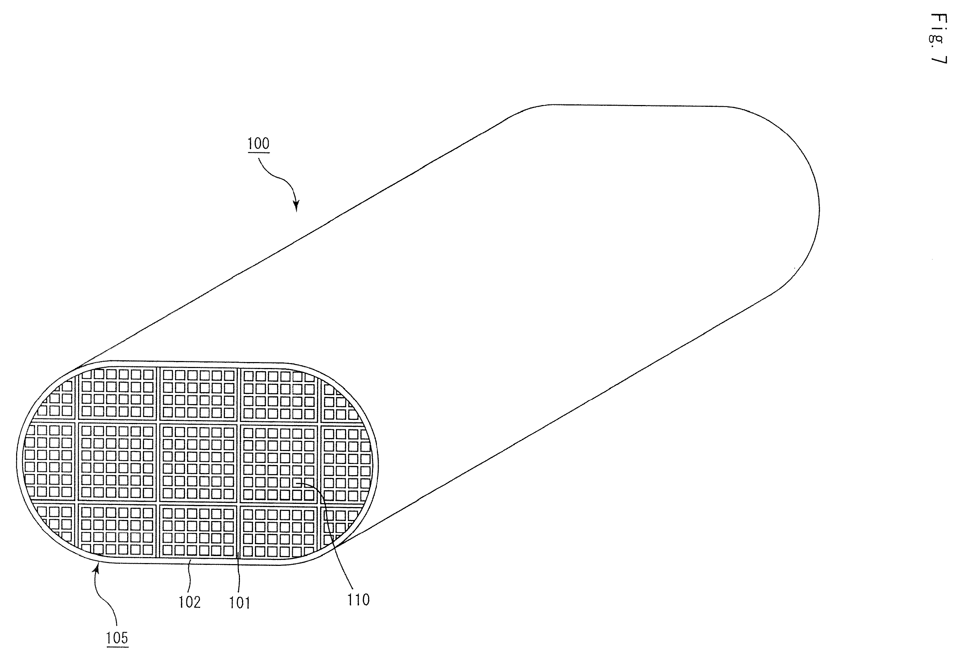

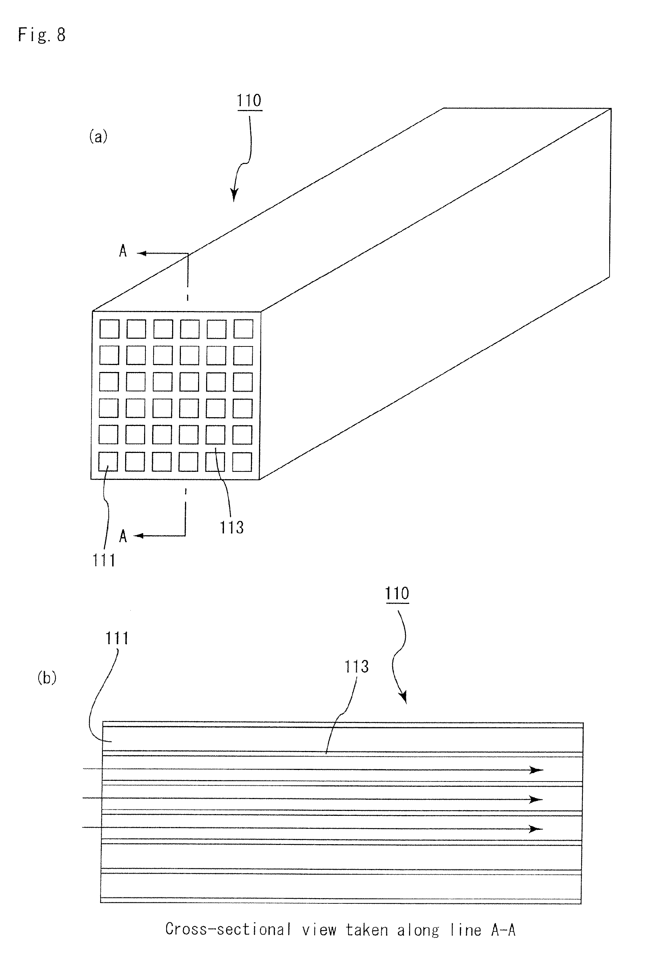

Fig. 7 is a perspective view that schematically shows a honeycomb filter made of such a honeycomb structured body. Moreover, Fig. 8(a) is a perspective view that schematically shows one example of a honeycomb unit that constitutes a honeycomb filter shown in Fig. 7, and Fig. 8(b) is a cross-sectional view taken along line A-A of Fig. 8(a).

As shown in Fig. 7, a honeycomb filter 100 has a structure inwhich a plurality of honeycomb units 110 made of silicon carbide and the like are bound together through sealing material layers 101 to constitute a honeycomb block 105, and a coat layer 102 is formed around this honeycomb block 105. The end face of the honeycomb filter 100 has a racetrack shape, and the sealing material layer between the honeycomb units on the cross section perpendicular to the longitudinal direction is configured to be almost perpendicular to or parallel to the major axis of the shape constituting the contour of the cross section.

As shown in Figs. 8(a) and 8(b), the honeycomb unit 110 is configured that it has a large number of cells 111 placed in parallel with one another in the longitudinal direction, and that exhaust gases which flow in pass through the cells 111, being converted thereby.

When manufacturingsuch a honeycombstructured body having a racetrack shape on its cross section perpendicular to the longitudinal direction, first, honeycomb units made of porous ceramics, as shown in Fig. 8, are prepared, then these honeycomb units are bonded to one another by using sealing material layers, and dried thereafter to fabricate a honeycomb unit aggregated body.

Next, this is subjected to a cutting process so that the cross section perpendicular to the longitudinal direction has a racetrack shape. In this case, the cutting process is carried such that the sealing material layer between the honeycomb units on the cross section forms a racetrack shape that is almost perpendicular to, or parallel to the major axis of the shape constituting the contour of the cross section. Finally, a sealing material layer is formed on the peripheral portion, and dried thereafter, and thus the manufacturing process of the honeycomb filter is completed.

According to the above-mentioned documents, the honeycomb structured body having this shape provides effects such as preventing degradation in the durability against canning (canning strength).

In the honeycomb structured body shown in Fig. 7, however, with respect to the cross section perpendicular to the longitudinal direction thereof, the sealing material layer is formed such that it is almost perpendicular to or parallel to the major axis of a racetrack shape constituting the contour of the cross section.

When the honeycomb structured body having this shape is placed in an exhaust pipe of an internal combustion engine, since a thermal stress tends to concentrate in the minor-axis direction, making the joint portion between the sealing material layer formed on the outer periphery that serves as a coat layer and the sealing material layer that serves as an adhesive layer to bond the honeycomb units to each other damaged easily, problems such as the occurring of cracks and degradation in the adhesion strength tend to occur.

DISCLOSURE OF THE INVENTION

PROBLEMS TO BE SOLVED BY THE INVENTION

The present invention has been devised to solve the above-mentioned problems, and it is therefore an object of the present invention to provide a flat-shaped honeycomb structured body in which, during use thereof, sealing material layers are hardly damaged by a thermal stress, and in which adhesion strength can be maintained.

MEANS FOR SOLVING THE PROBLEMS

More specifically, the honeycomb structured body of the present invention is a honeycomb structured body comprising:

a honeycomb block which has a flat-shaped cross section and has a structure in which plural honeycomb units are bonded to one another through sealing material layers, each unit having in the longitudinal direction a large number of cells placed in parallel with a cell wall therebetween, and

a sealing material layer provided on an outer peripheral portion of the honeycomb block,
wherein
each of the honeycomb units comprises inorganic fibers and/or whiskers in addition to inorganic particles, and
the sealing material layer which is formed between the honeycomb units on the cross section perpendicular to the longitudinal direction is formed such that the direction thereof is diagonal to the major axis of a shape constituting the contour of the cross section.

In the above-mentioned honeycomb structured body, desirably, the cross-sectional area on a cross section perpendicular to the longitudinal direction of said honeycomb unit is 5 to 50 cm$^2$.
Also in the above-mentioned honeycomb structured body, desirably, the smaller of the angles of which the sealingmaterial layer between the honeycomb units on the cross section perpendicular to the longitudinal direction and the major axis of the shape (outer peripheral shape) constituting the contour of the cross section make is within the range of 5 to 85°.
In the above-mentioned honeycomb structured body, it is desirable that the total sum of cross-sectional areas of the honeycomb units on the cross section perpendicular to the longitudinal direction accounts for 85% or more of the cross-sectional area of the honeycomb structured body on the cross section perpendicular to the longitudinal direction.
In the above-mentioned honeycomb structured body, it is desirable that the inorganic particles comprise of at least one member selected from the group consisting of alumina, silica, zirconia, titania, ceria, mullite and zeolite.
In the above-mentioned honeycomb structured body, it is desirable that the inorganic fibers and/or whiskers comprise of at least one member selected from the group consisting of alumina, silica, silicon carbide, silica-alumina, glass, potassium titanate, and aluminum borate.
In the above-mentioned honeycomb structured body, it is desirable that the honeycomb unit is manufactured by using a mixture containing the inorganic fibers and/or whiskers in addition to the inorganic particles and an inorganic binder, and that the inorganic binder comprises of at least one member selected from the group consisting of alumina sol, silica sol, titania sol, water glass, sepiolite and attapulgite.
On the honeycomb structured body, it is desirable that a catalyst is supported, and that the catalyst contains at least one member selected from the group consisting of noble metal, alkali metal, alkaline earth metal and oxide. Moreover, it is desirable that the above-mentioned honeycomb structured body is used for exhaust gas conversion of a vehicle.

EFFECTS OF THE INVENTION

According to the honeycomb structured body of present invention, since the sealingmaterial layer between the honeycomb units on the cross section perpendicular to the longitudinal direction is formed such that the direction thereof is diagonal to the major axis of a shape constituting the contour of the cross section, a concentration of stress hardly occurs between the sealing material layers formed near the minor axis, that is, between the sealing material layer inside the honeycomb structured body that serves as an adhesive layer and the sealing material layer formed on the outer periphery that serves as a coat layer; consequently, the sealingmaterial layers are hardly damaged during use, and thus the adhesion strength can be properly maintained in the sealing material layers.

BEST MODE FOR CARRYING OUT THE INVENTION

The honeycomb structured body of the present invention is a honeycomb structured body comprising:

a honeycomb block which has a flat-shaped cross section and has a structure in which plural honeycomb units are bonded to one another through sealing material layers, each unit having in the longitudinal direction a large number of cells placed in parallel with a cell wall therebetween, and
a sealing material layer provided on an outer peripheral portion of the honeycomb block,
wherein
each of the honeycomb units includes inorganic fibers and/or whiskers in addition to inorganic particles, and
the sealing material layer which is formed between the honeycomb units on the cross section perpendicular to the longitudinal direction is formed such that the direction thereof is diagonal to the major axis of a shape constituting the contour of the cross section.

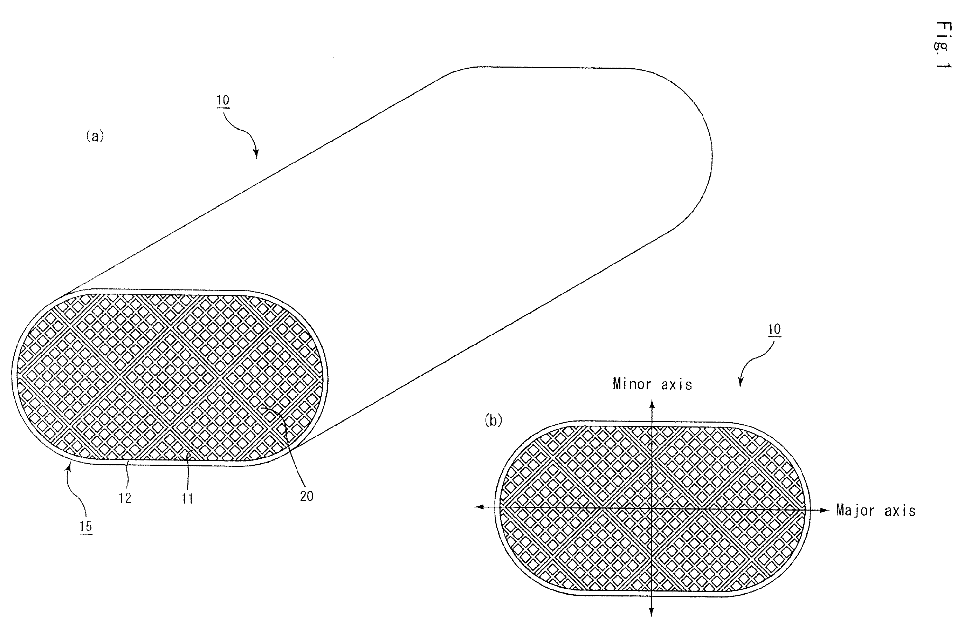

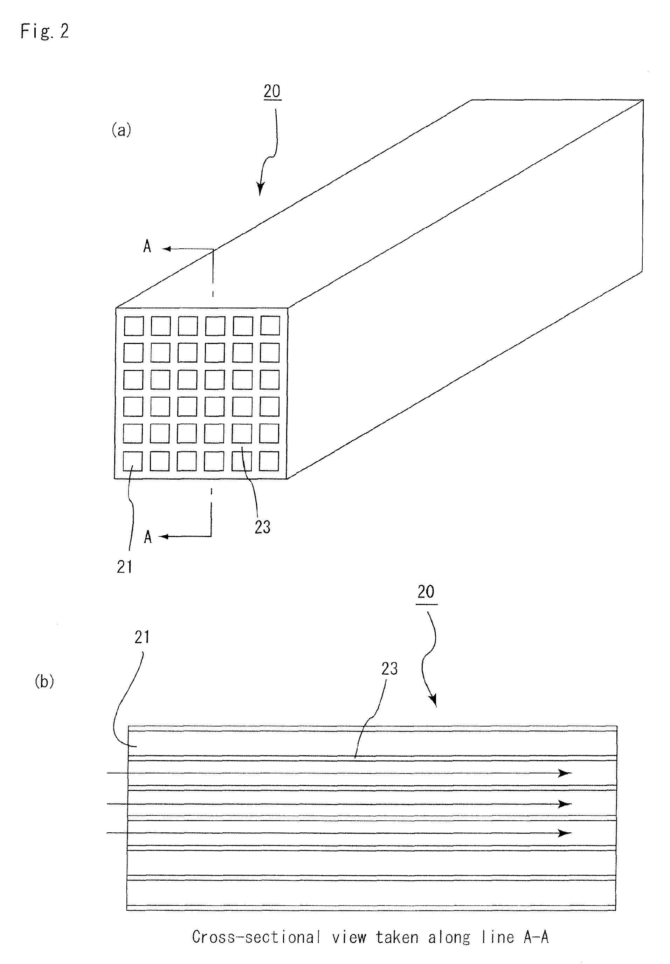

Fig. 1(a) is a perspective view that schematically shows one example of the honeycomb structured body of the present invention, and Fig. 1(b) shows the major axis and the minor axis of the honeycomb structured body shown in Fig. 1(a). Fig. 2(a) is a perspective view that schematically shows a honeycomb unit that constitutes the honeycomb structured body of the present invention, and Fig. 2(b) is a cross-sectional view taken along line A-A of the honeycomb unit shown in Fig. 2(a).

As shown in Fig. 1(a), the honeycomb structured body 10 has a structure in which a plurality of honeycomb units 20, each containing inorganic fibers and/or whiskers in addition to inorganic particles, are bound together through sealing material layers (adhesive layers) 11 to form a honeycomb block 15, and a sealing material layer (coat layer) 12 is formed around this honeycomb block 15. The end face of this honeycomb structured body 10 has a racetrack shape, and the sealing material layer (adhesive layer) 11 between the honeycomb units on the cross section perpendicular to the longitudinal direction is formed such that the direction thereof is diagonal to the major axis of a shape constituting the contour of the cross section.

As shown in Figs. 2(a) and 2(b), the honeycomb unit 20 has a structure in which a large number of cells 21 are placed in parallel with one another in the longitudinal direction, and the exhaust gases which flow into the cells 21 pass through the inside of the cells 21, being converted thereby.

In the honeycomb unit 20, although not shown in the figures, a catalyst for converting exhaust gases is supported on the cell wall. The above-mentioned catalyst will be described later.

In the present invention, since the sealing material layer (adhesive layer) 11 between the honeycomb units 20 on the cross section perpendicular to the longitudinal direction is formed such that the direction thereof is diagonal to the major axis of a shape constituting the contour of the cross section (racetrack shape), there are many portions at which the angle the sealing material layer (adhesive layer) 11 between the honeycomb units 20 on the cross section perpendicular to the longitudinal direction and the sealing material layer (coat layer) 12 make is diagonal.

As in the case of the conventional structure, when the sealing material layer between the honeycomb units on the cross section perpendicular to the longitudinal direction is formed such that it is perpendicular to the major axis of a shape constituting the contour of the cross section, there are many portions at which the angle the sealing material layer (adhesive layer) 101 and the sealing material layer (coat layer) 102 make is almost perpendicular, thereby making the area at which the two layers are made in contact with each ether to become small.

At the time of a temperature rise and the like, a stress is exerted between the sealing material layer (adhesive layer) 101 and the sealing material layer (coat layer) 102, and since the stress is perpendicularly imposed on the sealing material layer (coat layer) 102 and since the contact area between the two layers is small, the stress becomes greater, making the sealing material layer (coat layer) 102 to be damaged easily (see Fig. 7).

In the present invention, however, since there are many portions at which the sealing material layer (adhesive layer) 11 between the honeycomb units 20 on the cross section perpendicular to the longitudinal direction is formed such that the direction thereof is diagonal to the sealing material layer (coat layer) 12, and since the contact area between the sealing material layer (adhesive layer) 11 and the sealingmaterial layer (coat layer) 12 is large, the strength to be imposed perpendicularly on the sealing material layer (coat layer) 12 becomes smaller, and the sealing material layer (coat layer) 12 is hardly damaged.

In the present invention, it is desirable that the smaller of the angles of which the sealing material layer 11 between the honeycomb units on the cross section perpendicular to the longitudinal direction and the maj or axis of the outer peripheral shape make is 5°, more desirably 15°, still more desirably 30° in minimum value, and desirably 85°, more desirably 75°, still more desirably 60° in maximum value.

When the angle the sealing material layer 11 between the honeycomb units on the cross section perpendicular to the longitudinal direction and the major axis of the outer peripheral shape make is less than 5° or exceeds 85°, there is hardly any difference from when the angle is perpendicular. As a result, the sealingmaterial layer tends to be damaged easily by a thermal shock and the like.

Moreover, in the present invention, it is desirable that the area on the cross section perpendicular to the longitudinal direction of each honeycomb unit constituting the honeycomb structured body is 5 cm$^2$, more desirably 6 cm$^2$, still more desirably 8 cm$^2$ in lower limit. In contrast, it is desirable that the upper limit thereof is 50 cm$^2$, more desirably 40 cm$^2$, still more desirably 30 cm$^2$.

When the cross-sectional area is less than 5 cm$^2$, the cross-sectional area of the sealing material layers (adhesive layers) used for bonding honeycomb units to one another becomes greater, thereby making the specific surface area on which a catalyst is supported relatively small, while a pressure loss is made to be relatively great. On the other hand, when the cross-sectional area exceeds 50 cm$^2$, the size of the unit becomes too large, making it difficult to sufficiently suppress the thermal stress generated in each honeycomb unit.

However, when the cross-sectional area of the honeycomb unit perpendicular to the longitudinal direction is 5 to 50 cm$^2$, since the cross-sectional area is small, there is not so much temperature difference between the center portion and the peripheral portion even upon a temperature rise and the like, and thus the thermal stress does not become so high, leading to high durability to thermal shock.

In addition, since the specific surface area per unit area of the honeycomb unit is maintained in a great level, it becomes possible to disperse catalyst components in a high level, and also to maintain the proper shape of the honeycomb structured body even when external forces such as thermal shock and vibration are applied thereto.

Here, the specific surface area per unit volume can be calculated by the after-mentioned expression (1).

In the present description, when the honeycomb structured body includes plural honeycomb units which have different cross-sectional areas, the cross-sectional area of the honeycomb unit on the cross section perpendicular to the longitudinal direction refers to the cross-sectional area on the cross section perpendicular to the longitudinal direction of the honeycomb unit that serves as a basic unit constituting the honeycomb structured body, that is, normally, the largest cross-sectional area on the cross section perpendicular to the longitudinal direction of the honeycomb unit.

The honeycomb units that constitute the honeycomb structured body of the present invention include inorganic fibers and/or whiskers in addition to inorganic particles.

In such a honeycomb structured body which includes inorganic fibers and/or whiskers in addition to inorganic particles, the specific surface area is improved by the inorganic particles, and the strength of the porous ceramic is improved by the inorganic fibers and/or whiskers.

As the inorganic particles, it is desirable that particles made of alumina, silica, zirconia, titania, ceria, mullite, zeolite, and the like are used. These particles may be used independently, or two or more kinds thereof may be used in combination.

Among these, it is especially desirable to use alumina particles.

It is desirable that the inorganic fibers and whiskers include inorganic fibers and whiskers made of alumina, silica, silicon carbide, silica-alumina, glass, potassium titanate, aluminum borate, and the like.

These particles may be used independently, or two or more kinds thereof may be used in combination.

The aspect ratio (length/diameter) of the above-mentioned inorganic fibers and whiskers is 2, more desirably 5, most desirably 10 in lower limit, and 1000, more desirably 800, most desirably 500 in upper limit.

Here, when there is a distribution in the aspect ratio, the aspect ratio of the inorganic fibers and whiskers is indicated by the average value thereof.

It is desirable that the amount of the inorganic particles contained in the honeycomb unit is 30% by weight, more desirably 40% by weight, most desirably 50% by weight in lower limit.

In contrast, it is desirable that the upper limit thereof is 97% by weight, more desirably 90% by weight, most desirably 80% by weight, and especially desirable when 75% by weight.

If the content of the inorganic particles is less than 30% by weight, the amount of inorganic particles that devote to improvements of the specific surface area becomes relatively small, making the specific surface area of the honeycomb structured body small, failing to disperse a catalyst component in a high level upon supporting the catalyst component. If the content of the inorganic particles exceeds 97% by weight, the amount of the inorganic fibers and/or whiskers that devote to improvements in strength becomes relatively small, leading to a reduction in the strength of the honeycomb structured body.

It is desirable that the total amount of the inorganic fibers and/or whiskers contained in the honeycomb unit is 3% by weight, more desirably 5% by weight, most desirably 8% by weight in lower limit, and that the upper limit thereof is 70% by weight, more desirably 50% by weight, most desirably 40% by weight, and especially desirable when 30% by weight.

If the total amount of the inorganic fibers and/or whiskers is less than 3% by weight, the strength of the honeycomb structured body is reduced. In contrast, if the total amount thereof exceeds 50% by weight, the amount of inorganic particles that devote to improvements of the specific surface area becomes relatively small, making the specific surface area of the honeycomb structured body small, failing to disperse a catalyst component in a high level upon supporting the catalyst component.

Moreover, it is desirable that the honeycomb unit is manufactured by using a mixture containing the inorganic particles, the inorganic fibers and/or whiskers and an inorganic binder.

By thus using a mixture containing the inorganic binder, a porous ceramic that has sufficient strength can be obtained even when the temperature at which a raw molded body is fired is set to a low level.

As the inorganic binder, an inorganic sol, a clay-type binder and the like can be used, and specific examples of the inorganic sol include, for example, alumina sol, silica sol, titania sol, water glass and the like. Moreover, examples of the clay-type binder include, for example, clays having a double-chain structure, such as clay, kaolin, montmorillonite, sepiolite, attapulgite and the like, and clays of the like. These may be used independently, or two or more kinds thereof may be used in combination.

Among these, it is desirable therefor to comprise of at least one kind selected from the group consisting of alumina sol, silica sol, titania sol, water glass, sepiolite and attapulgite is used.

It is desirable that the amount of the inorganic binder that serves as a solid component of a raw material paste prepared in a manufacturing process which will be described later is 5% by weight, more desirably 10% by weight, most desirably 15% by weight in lower limit, and that the upper limit thereof is 50% by weight, more desirably 40% by weight, most desirably 35% by weight.

If the content of the inorganic binder exceeds 50% by weight, moldability is deteriorated.

In the honeycomb structured body 10 of the present invention, the sealing material layer (adhesive layer) 11 is formed between the honeycomb units 20 so as to also function as an adhesive to bind the plurality of honeycomb units 20 together. In contrast, the sealing material layer (coat layer) 12 that is formed on the outer peripheral face of a honeycomb block 15 so as to function as a sealing member that prevents exhaust gases from leaking from the outer peripheral face of the honeycomb block 15 when the honeycomb structured body 10 is placed in an exhaust passage of an internal combustion engine.

Here, in the honeycomb structured body 10, the sealing material layer 11 and the sealing material layer 12 may be made of the same material, or from different materials. When the sealing material layer 11 and the sealing material layer 12 are made of the same material, the blending ratio of materials may be the same or may be different.

It is desirable that the sealing material layer 11 has the thickness of 0.5 mm in lower limit, and 2 mm in upper limit. When the thickness of the sealingmaterial layer (adhesive layer) is less than 0.5 mm, sufficient adhesion strength can not be secured in some cases. In contrast, when the thickness exceeds 2 mm, the specific surface area per unit volume of the honeycomb structured body tends to be reduced, making it difficult to disperse a catalyst component sufficiently in a high level when the catalyst component is dispersed. Further, when the thickness of the sealing material layer exceeds 2 mm, the pressure loss may become large in some cases.

The material for forming the sealing material layer 11 and the sealing material layer 12 is not particularly limited, and may include, for example, a material composed of an organic binder and inorganic fibers and/or inorganic particles in addition to an inorganic binder, and materials of the like.

Examples of the inorganic binder include silica sol, alumina sol and the like. These may be used independently, or two or more kinds thereof may be used in combination. Among the inorganic binders, it is desirable for silica sol to be used.

Examples of the organic binder include polyvinyl alcohol, methyl cellulose, ethyl cellulose, carboxymethyl cellulose and the like. These may be used independently, or two or more kinds thereof may be used in combination. Among the organic binders, it is desirable for carboxymethyl cellulose to be used.

Examples of the inorganic fibers include ceramic fibers such as silica alumina fibers, mullite fibers, alumina fibers, silica fibers and the like. These may be used independently, or two or more kinds thereof may be used in combination. Among the inorganic fibers, it is desirable for alumina fibers and silica-alumina fibers to be used.

Examples of the inorganic particles include particles made of oxides, carbides, nitrides and the like, and specific examples thereof include inorganic powders made of alumina, silicon carbide, silicon nitride, boron nitride and the like. These may be used independently, or two or more kinds thereof may be used in combination.

Moreover, a pore-forming agent, such as balloons that are fine hollow spheres composed of oxide-based ceramics, spherical acrylic particles, graphite and the like, may be added to the above-mentioned sealing material paste, if necessary.

The above-mentioned balloons are not particularly limited, and may include, for example, alumina balloons, glass microballoons, shirasuballoons, flyashballoons (FAballoons), mullite balloons and the like. Among these, it is desirable for the alumina balloons to be used.

In the honeycomb structured body of the present invention, it is desirable that the total sum of cross-sectional areas of the honeycomb units on the cross sections perpendicular to the longitudinal direction accounts for 85% or more, more desirably 90% ormore of the cross sectional area of the honeycomb structured body on the cross section perpendicular to the longitudinal direction.

When the percentage is less than 85%, the ratio of the cross-sectional areas of the sealing material layers therein becomes greater, while the total cross-sectional area of the honeycomb units is reduced, making the specific surface area on which a catalyst is supported relatively smaller, which as a result provides a relatively high pressure loss.

When the percentage is 90% or more, the pressure loss can be further reduced.

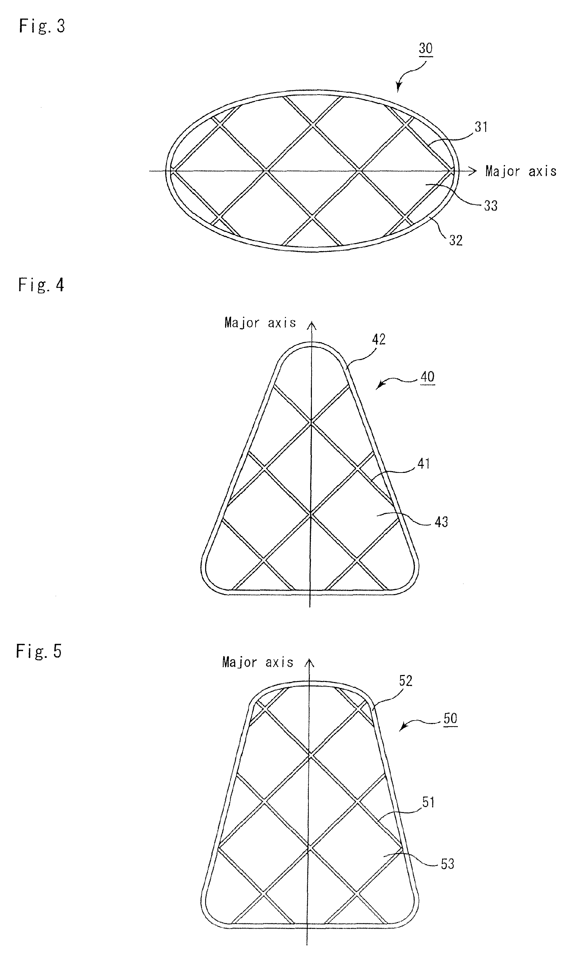

Although the honeycomb structured body 10 shown in Fig. 1 has a racetrack shape, the shape of the honeycomb structured body of the present invention is not particularly limited to this shape, as long as its cross section has a flat shape, and for example, as shown in Fig. 3, the shape of the cross section perpendicular to the longitudinal direction may be formed into an elliptical shape, or may be formed into shapes as shown in Figs. 4 and 5. Here, in Figs. 3 to 5, reference numerals 31, 41 and 51 represent inner sealing material layers (adhesive layers); 32, 42 and 52 represent outer peripheral sealing material layers (coat layers); and 33, 43 and 53 represent honeycomb units.

In the honeycomb structured body of the present invention, the cross section mentioned in the term "flat-shaped cross section" refers to a cross section perpendicular to the longitudinal direction of the honeycomb structured body. Moreover, in addition to a racetrack shape and an elliptical shape, the flat shape may also include a shape which has a major axis with a line-symmetric pattern, such as the shapes shown in Figs. 4 (almost triangular shape) and 5 (almost trapezoidal shape).

The honeycomb structured body 10 desirably has a catalyst capable of converting CO, HC, NOx and the like in exhaust gases supported thereon.

When such a catalyst is supported thereon, the honeycomb structured body 10 is allowed to function as a catalyst converter for converting CO, HC, NOx and the like contained in exhaust gases.

The catalyst supported on the honeycomb structured body 10 is not particularly limited as long as it can convert CO, HC, NOx and the like in exhaust gases, and they may include, for example, noble metals such as platinum, palladium, rhodium and the like, alkali metals, alkaline earth metals and oxides.

These may be used independently, or two or more kinds thereof may be used in combination.

Next, description of one example of a manufacturing method of the honeycomb structured body of the present invention will be given.

First, by using a raw material paste containing inorganic fibers and/or whiskers in addition to inorganic particles, an extrusion molding is carried out to prepare a ceramic molded body having a square pillar shape.

It is necessary for the raw material paste to be made of the above-mentioned inorganic fibers and/or whiskers in addition to inorganic particles, and in addition thereto, the inorganic binder, the organic binder, a dispersant and a molding assistant may be added appropriately, so that the resulting paste can be used as the raw material paste.

The above-mentioned raw material paste may be prepared by mixing the various components using an attritor and the like, and further kneading it sufficiently using a kneader and the like.

Although examples of the organic binder are not particularly limited, they may include, for example, methyl cellulose, carboxymethyl cellulose, hydroxyethyl cellulose, polyethylene glycol, phenol resins, epoxy resins and the like. These may be used independently, or two or more kinds thereof may be used in combination.

It is preferable that the blending quantity of the organic binder is in the range of 1 to 10 parts by weight out of 100 parts by weight of a total of the inorganic particles, the inorganic fibers, the whiskers and the inorganic binder.

Although examples of the dispersant are not particularly limited, they may include, for example, water, an organic solvent such as benzene and the like, alcohol such as methanol and the like, and dispersants of the like.

Moreover, a molding assistant may be added to the raw material paste, if necessary.

The above-mentioned molding assistant is not particularly limited, and they may include, for example, ethylene glycol, dextrin, fatty acid, fatty acid soap, polyalcohol and the like.

Next, the ceramic molded body is dried by using, for example, a microwave dryer, a hot-air dryer, a dielectric dryer, a reduced-pressure dryer, a vacuum dryer, a freeze dryer and the like, to prepare a ceramic dried body.

Thereafter, the resulting ceramic dried body is subjected to a degreasing process and a firing process under predetermined conditions, so that a honeycomb unit 20 which contains at least inorganic fibers and/or whiskers in addition to inorganic particles, and is composed of a single sintered body in its entire structure, can be manufactured.

The degreasing process of the ceramic dried body is carried out, for example, at 400°C for 2 hours. Most of the organic binder and the like are thereby volatilized, decomposed and eliminated.

The firing process is carried out by heating at a temperature in the range of 600 to 1200°C.

When the firing temperature is less than 600°C, the sintering of ceramic particles and the like fails to progress, leading to reduction in the strength of the honeycomb structured body. In contrast, when the firing temperature exceeds 1200°C, the sintering of ceramic particles and the like tends to progress too quickly, leading to reduction in the specific surface area per unit volume and the subsequent failure in sufficiently dispersing a catalyst component in a high level, at the time of supporting the catalyst component.

Here, the more desirable firing temperature is in the range of 600 to 1000°C.

The method for applying a catalyst to the alumina film of the honeycomb unit include, for example, a method in which the ceramic fired body is impregnated with diammine dinitro platinum nitric acid solution ($[Pt(NH_3)_2(NO_2)_2]$ $HNO_3$; platinum concentration: 4.53% by weight) and the like, and heated thereafter, and of the like methods.

Next, a sealing material paste for forming a sealing material layer 11 is applied with an even thickness to the side faces of the honeycomb unit 20 to form a sealing material paste layer, and a process in which another honeycomb unit 20 is successively piled up on the sealing material paste layer is repeated so that a honeycomb unit aggregated body having a predetermined size is fabricated.

Since the explanation for the material for forming the sealing material paste has already been given, the detailed description thereof will be omitted here.

Next, this honeycomb unit aggregated body is dried and solidified through the heating of the sealing material paste layers, so that the sealing material layers 11 are formed.

By using a diamond cutter and the like, the honeycomb unit aggregated body in which a plurality of honeycomb units 20 are bonded to one another through the sealing material layers 11 is subjected to a cutting process such that each sealing material layer 11 between the honeycomb units 20 on the cross section perpendicular to the longitudinal direction is formed diagonal to the major axis of a shape that constitutes the contour of the cross section; thus, a flat-shaped honeycomb block 15 is fabricated.

Compared with a method in which a honeycomb block having a predetermined shape is prepared by combining and bonding to one another honeycomb units manufactured in various shapes, the manufacturing process can be simplified when the honeycomb block is manufactured through this cutting process.

By forming a sealing material layer 12 on the outer periphery of the honeycomb block 15 by using the sealing material paste, it is possible to manufacture a honeycomb structured body 10 in which a sealing material layer 12 is formed on the outer peripheral portion of the flat-shaped honeycomb block 15 in which a plurality of honeycomb units 20 are bonded to one another through the sealing material layers 11.

Although the use of the honeycomb structured body of the present invention is not particularly limited, it is desirable to be used for exhaust gas conversion of vehicles.

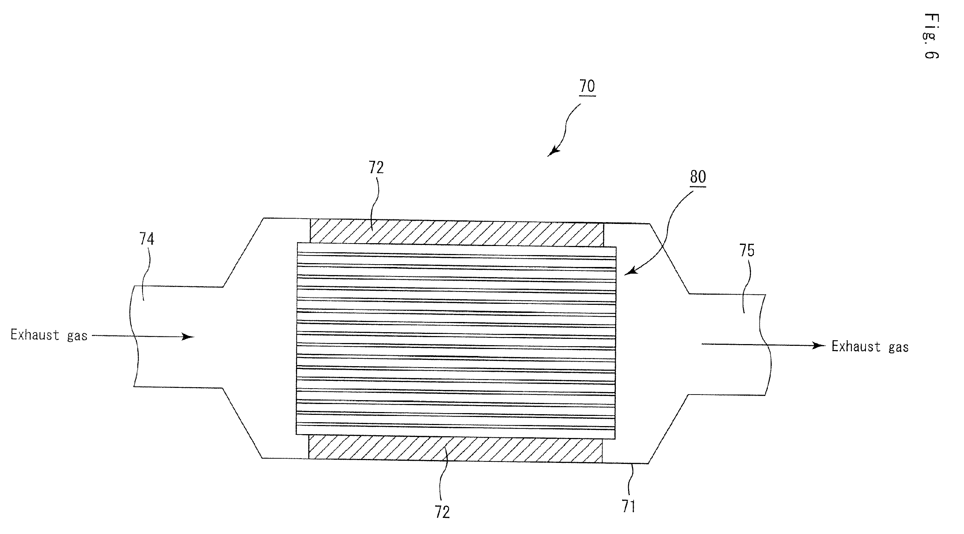

Fig. 6 is a cross-sectional view that schematically shows one example of an exhaust gas conversion device for a vehicle with the honeycomb structured body of the present invention installed therein.

As shown in Fig. 6, an exhaust gas conversion device 70 is mainly constituted by a honeycomb structured body 80, a casing 71 that covers the periphery of the honeycomb structured body 80, and a holding sealing material 72 that is placed between the honeycomb structured body 80 and the casing 71; and connected to one end of the casing 71 on the exhaust gas inlet side is an introducing pipe 74, which is connected to an internal combustion system such as an engine, and connected to the other end of the casing 71 is an exhaust pipe 75 connected to the outside. Moreover, the arrows in Fig. 6 show flows of exhaust gases.

Furthermore, in Fig. 6, the honeycomb structured body 80 may be prepared as the honeycomb structured body 10 shown in Fig. 1 or as the honeycomb structured bodies 30, 40 or 50 shown in Figs. 3 to 5. In these cases, however, the casings need to be formed into shapes which fit each of the shapes of the honeycomb structured bodies.

In the exhaust gas conversion device 70 having the above-mentioned configuration, exhaust gases discharged from the internal combustion system such as an engine, are directed into the casing 71 through the introducing pipe 74, and allowed to flow into the honeycomb structured body from inlet-side cells; after having passed through the cells and being converted thereby, the exhaust gases are discharged out of the honeycomb structured body from outlet-side cells, and then discharged to the outside through the exhaust pipe 75.

Although not shown in the figures, the above-mentioned catalyst is supported on the cell walls of the honeycomb structured body.

When used as a catalyst support for exhaust gas conversion of a diesel engine, the honeycomb structured body is sometimes used together with a diesel particulate filter (DPF) that has a ceramic honeycomb structure made of silicon carbide and the like and also has a function of filtering and burning particulate matters (PMs) in exhaust gases, and in such a case, the positional relationship between the honeycomb structured body of the present invention and the DPF may be such that the honeycomb structured body of the present invention is placed on either the front side or the rear side of the DPF.

When placed on the front side, heat generated through the reaction of the honeycomb structured body of the present invention is transmitted to the DPF on the rear side, and the temperature raising process at the time of regeneration of the DPF can be accelerated. In contrast, when placed on the rear side, PMs in exhaust gases are filtered through the DPF, and pass through the cells of the honeycomb structured body of the present invention thereafter; therefore, clogging hardly occurs, and gas components generated through incomplete combustion upon burning PMs in the DPF, are also processed by using the honeycomb structured body of the present invention.

EXAMPLES

In the following, description of the present invention will be given in detail by way of examples; however, the present invention is not intended to be limited by these examples.

(Example 1)

Herein, 40% by weight of $\gamma$-alumina particles (average particle diameter: 2 $\mu$m), 10% by weight of silica-alumina fibers (average fiber diameter: 10 $\mu$m, average fiber length: 100 $\mu$m, aspect ratio: 10) and 50% by weight of silica sol (solid concentration: 30% by weight) were mixed, and to 100 parts by weight of the resulting mixture were added 6 parts by weight of methylcellulose serving as an organic binder and a slight amount of a plasticizer and a lubricant, and the mixture was further mixed and kneaded to obtain a mixed composition.

Next, this mixed composition was extrusion-molded, so that a raw molded product which had almost the same end face shape as the end face shape shown in Fig. 2(a) was fabricated.

Next, the above-mentioned raw molded product was dried by using a microwave dryer and the like, and thus a ceramic dried body was prepared. This was degreased at 400°C for 2 hours, and fired at 800°C for 2 hours thereafter, so that a honeycomb unit 20, which had a specific surface area of 42000 $m^2$/L, a size of 34.3 mm $\times$ 34.3 mm $\times$ 150 mm, the number of cells 21 of 93 cells/$cm^2$ and cell walls 23 in a thickness of 0.20 mm, was manufactured.

Table 1 shows the cross-sectional area of the honeycomb unit. As shown in Table 1, the cross-sectional area of the honeycomb unit was 11.8 $cm^2$.

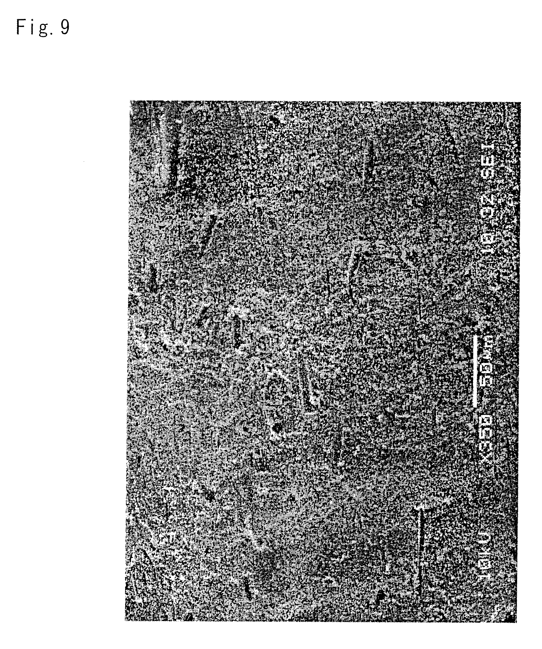

Fig. 9 shows a scanning electron microscopic (SEM) photograph of the cell walls of this honeycomb unit.

Next, 29% by weight of $\gamma$-alumina particles (average particle diameter: 2 $\mu$m), 7% by weight of silica-alumina fibers (average fiber diameter: 10 $\mu$m, average fiber length: 100 $\mu$m), 34% by weight of silica sol (solid concentration: 30% by weight), 5% by weight of carboxymethyl cellulose and 25% by weight of water were mixed to prepare a heat resistant sealing material (adhesive) paste. Byusingthis sealing material paste, a number of honeycomb units 20 were piled up, and the resulting piled up body was cut by using a diamond cutter such that the sealing material layers between the honeycomb units were formed into a pattern as shown in Fig. 1; thus, a honeycomb block 15 having a racetrack shape in its contour of the end face was fabricated.

In this case, the sealing material layer 11 which bonds the honeycomb units 20 was adjusted such that it had the thickness of 1.0 mm.

Next, by using the same paste as the above-mentioned sealing material paste, a sealing material paste layer was formed on the outer peripheral portion of the honeycomb block 15. This sealing material paste layer was dried at 120°C to form a sealing material layer (coat layer) 12, and thus a honeycomb structured body 10, which had a racetrack shape in its contour of the end face with 200 mm in major axis × 100 mm in minor axis, and the sealing material layer (coat layer) having 0.2 mm in thickness, was manufactured. Here, the cross-sectional area of the honeycomb structured body on the cross section perpendicular to the longitudinal direction was 179 cm$^2$ and the angle which the sealing material layers between the honeycomb units on the cross section and the major axis of the shape constituting the contour of the cross section made was 5°.

Here, the cross-sectional area of this honeycomb unit was 11.8 cm$^2$ at maximum.

Here, the specific surface area of the honeycomb unit was measured by using the following method.

First, volumes of honeycomb units and sealing material layers were actually measured, and a ratio A (vol%) of the honeycomb units in the volume of the honeycomb structured body was calculated. Next, a BET specific surface area B (m$^2$/g) per unit weight of the honeycomb unit was measured. The BET specific surface area was measured through a one-point method in compliance with JIS-R-1626 (1996) defined by Japanese Industrial Standard, byusingaBETmeasuringdevice (Micromeritics FlowSorb II-2300, made by Shimadzu Corp.). Upon measuring, samples prepared by cutting out cylindrical-shaped small pieces (15 mm in diameter × 15 mm in height) were used. Then, the apparent density C (g/L) of the honeycomb unit was calculated through the weight and the volume decided by the shape of the honeycomb units, and the specific surface area S (m$^2$/L) of the honeycomb structured body was calculated from the following expression (1). Here, the specific surface area of the honeycomb structured body refers to a specific surface area per apparent volume of the honeycomb structured body.

$$S(m^2/L) = (A/100) \times B \times C \dots (1)$$

(Examples 2 to 7, Comparative Examples 1 to 3)

A honeycomb structured body 10 was manufactured through the same processes as those of Example 1, except that the angle which the sealing material layers (adhesive layers) between the honeycomb units on the cross section perpendicular to the longitudinal direction and the major axis of the shape constituting the contour of the cross section make, and the maximum cross-sectional area of the honeycomb unit perpendicular to the longitudinal direction were set to values indicated by Table 1.

(Examples 8 to 14, Comparative Examples 4 to 6)

A honeycomb structured body 30 was manufactured through the same processes as those of Example 1, except that the contour of the end face was formed into an elliptical shape as shown in Fig. 3, and that the angle which the sealing material layers (adhesive layers) between the honeycomb units on the cross section perpendicular to the longitudinal direction and the major axis of the shape constituting the contour of the cross section make, and the maximum cross-sectional area of the honeycomb unit perpendicular to the longitudinal direction were set to values indicated by Table 1.

(Examples 15 to 21, Comparative Examples 7 to 9)

A honeycomb structured body 50 was manufactured through the same processes as those of Example 1, except that the contour of the end face was formed into an almost triangular shape as shown in Fig. 4 and that the angle which the sealing material layers (adhesive layers) between the honeycomb units on the cross sectionperpendicular to the longitudinal direction and the major axis of the shape constituting the contour of the cross section make, and the maximum cross-sectional area of the honeycomb unit perpendicular to the longitudinal direction were set to values indicated by Table 1.

(Examples 22 and 23, Reference Examples 1 and 2)

Honeycomb structured bodies 10 were manufactured through the same processes as those of Example 1, except that the maximum cross-sectional area of the honeycomb unit perpendicular to the longitudinal direction was set to values indicated by Table 1. The herein used honeycomb units perpendicular to the longitudinal direction had the cross-sectional dimensions of 2.24 × 2.24 cm, 7.10 × 7.10 cm, 2.0 × 2.0 cm, and 7.41 × 7.41 cm in Examples 22, 23, Reference Example 1, and Reference Example 2, respectively.

(Evaluation)

The honeycomb structured bodies manufactured in the Examples, the Comparative Examples and the Reference Examples were subjected to thermal shock/vibration repetitive tests and measurements on the pressure loss, by using the following methods.

[Thermal shock/vibration repetitive test]

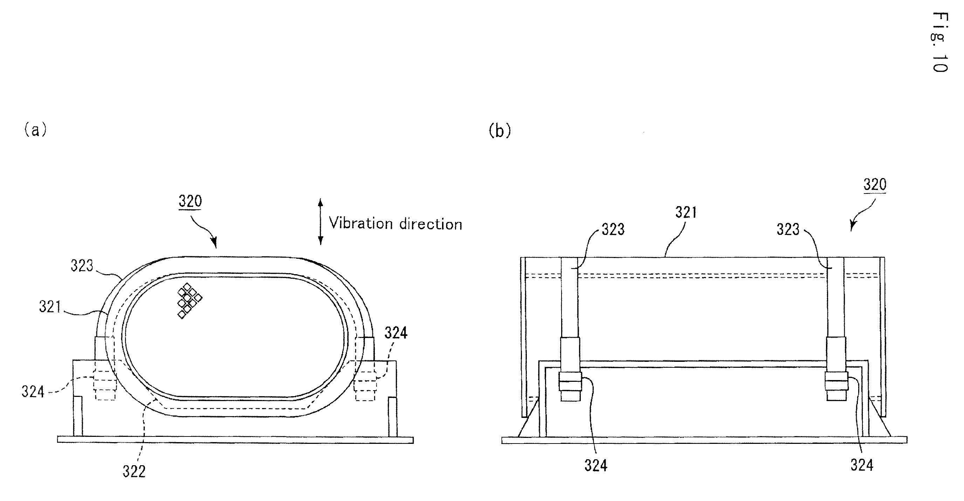

In a thermal shock test, a honeycomb structured body, being kept in a metal casing 321, with an alumina mat (MAFTEC, 46.5 cm × 15 cm, thickness 6 mm, made by Mitsubishi Chemical Corp.), which is a heat-insulatingmaterial made of alumina fibers, wound around the peripheral face thereof was put into a firing furnace set at 600°C, and was heated for 10 minutes, and then taken out from the firing furnace and quenched to room temperature. Next, a vibration test was carried out by keeping the honeycomb structured body in this metal casing. Fig. 10(a) is a front view that shows a vibration testing device 320 used for the vibration test, and Fig. 10(b) is a side view that shows the vibration testing device 320. The metal casing 321 which held the honeycomb structured body therein was placed on a mount 322, and the metal casing 321 was secured thereon by tightening a securing member 323 having an almost U-shape with a screw 324. Thus, the metal casing 321 was allowed to vibrate with the mount 322 and the securing member 323 being integrally held together therewith. The vibration test was carried out under conditions of a frequency of 160 Hz, an acceleration of 30 G, an amplitude of 0.58 mm and a retention time of 10 hr, at room temperature, and in a vibration direction of the Z-axis direction (up and down). 10 times each of these thermal shock test and vibration test were repeated alternately, and the weight T0 before the tests and the weight Ti after the tests were measured, and the weight reduction ratio G was calculated by using the following expression (2).

$$G \ (wt\%) = 100 \times (T0 - Ti)/T0 \ \dots \ (2)$$

The metal casings used in this test had respective shapes such that honeycomb structured bodies having respective shapes could fit in.

[Pressure loss measurement]

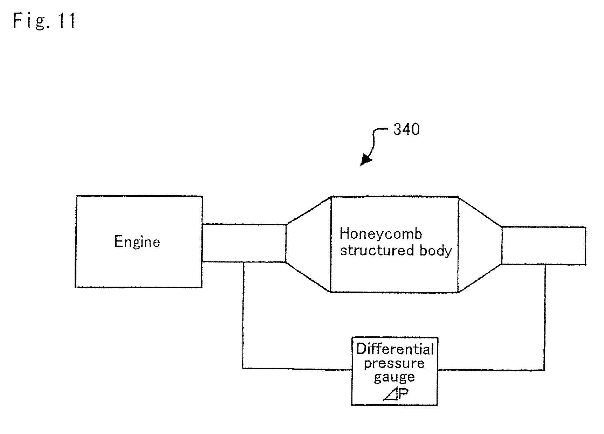

A pressure-loss measuring device 340 is shown in Fig. 11. In this measuring method, a honeycomb structured body with an alumina mat being wound thereon, which was put into a metal casing, was placed in an exhaust pipe of a common rail-type diesel engine of 2L, and pressure meters were attached to front and rear sides of the honeycomb structured body. With respect to the measuring conditions, the engine revolution was set to 1500 rpm and the torque was set to 50 Nm, and a differential pressure after a lapse of 5 minutes from the start up was measured.
Table 1

| | Cross-sectional shape of honeycomb structured body | Maximum cross-sectional area ($cm^2$) | Angle (°) | Reduction ratio G after thermal shock/ vibration tests (wt%) | Pressure loss (kPa) |
|---|---|---|---|---|---|
| Example 1 | Fig. 1 (racetrack shape) | 11.8 | 5 | 8 | 2.6 |
| Example 2 | Fig. 1 (racetrack shape) | 11.8 | 15 | 5 | 2.6 |
| Example 3 | Fig. 1 (racetrack shape) | 11.8 | 30 | 0 | 2.6 |
| Example 4 | Fig. 1 (racetrack shape) | 11.8 | 45 | 0 | 2.6 |
| Example 5 | Fig. 1 (racetrack shape) | 11.8 | 60 | 0 | 2.6 |
| Example 6 | Fig. 1 (racetrack shape) | 11.8 | 75 | 5 | 2.6 |
| Example 7 | Fig. 1 (racetrack shape) | 11.8 | 85 | 9 | 2.6 |
| Comparative Example 1 | Fig. 1 (racetrack shape) | 11.8 | 0 | 22 | 2.6 |
| Comparative Example 2 | Fig. 1 (racetrack shape) | 11.8 | 3 | 18 | 2.6 |
| Comparative Example 3 | Fig. 1 (racetrack shape) | 11.8 | 88 | 19 | 2.6 |
| Example 8 | Fig. 3 (elliptical shape) | 11.8 | 5 | 7 | |
| Example 9 | Fig. 3 (elliptical shape) | 11.8 | 15 | 0 | |
| Example 10 | Fig. 3 (elliptical shape) | 11.8 | 30 | 0 | |
| Example 11 | Fig. 3 (elliptical shape) | 11.8 | 45 | 0 | |
| Example 12 | Fig. 3 (elliptical shape) | 11.8 | 60 | 0 | |
| Example 13 | Fig. 3 (elliptical shape) | 11.8 | 75 | 3 | |
| Example 14 | Fig. 3 (elliptical shape) | 11.8 | 85 | 6 | |
| Comparative Example 4 | Fig. 3 (elliptical shape) | 11.8 | 0 | 25 | |
| Comparative Example 5 | Fig. 3 (elliptical shape) | 11.8 | 3 | 20 | |

EP 1 736 220 A1

| | | 11.8 | 88 | 18 | |
|---|---|---|---|---|---|
| Comparative Example 6 | Fig. 3 (elliptical shape) | 11.8 | 88 | 18 | |
| Example 15 | Fig. 4 (almost triangular shape) | 11.8 | 5 | 9 | |
| Example 16 | Fig. 4 (almost triangular shape) | 11.8 | 15 | 5 | |
| Example 17 | Fig. 4 (almost triangular shape) | 11.8 | 30 | 0 | |
| Example 18 | Fig. 4 (almost triangular shape) | 11.8 | 45 | 0 | |
| Example 19 | Fig. 4 (almost triangular shape) | 11.8 | 60 | 0 | |
| Example 20 | Fig. 4 (almost triangular shape) | 11.8 | 75 | 4 | |
| Example 21 | Fig. 4 (almost triangular shape) | 11.8 | 85 | 8 | |
| Comparative Example 7 | Fig. 4 (almost triangular shape) | 11.8 | 0 | 23 | |
| Comparative Example 8 | Fig. 4 (almost triangular shape) | 11.8 | 3 | 17 | |
| Comparative Example 9 | Fig. 4 (almost triangular shape) | 11.8 | 88 | 20 | |
| Example 22 | Fig. 1 (racetrack shape) | 5.0 | 45 | 0 | 2.7 |
| Example 23 | Fig. 1 (racetrack shape) | 50.0 | 45 | 3 | 2.5 |
| Reference Example 1 | Fig. 1 (racetrack shape) | 4.0 | 45 | 0 | 3.0 |
| Reference Example 2 | Fig. 1 (racetrack shape) | 55.0 | 45 | 40 | 2.5 |

As clearly indicated byTable 1, those honeycomb structured bodies according to the Examples in which the sealing material layers between the honeycomb units on a cross section perpendicular to the longitudinal direction were formed such that their directions are diagonal to the major axis of a shape constituting the contour of the cross section, exerted excellent durability to thermal shock and vibration, and in contrast, those honeycomb structured bodies according to the Comparative Examples in which the sealing material layers between the honeycomb units on a cross section perpendicular to the longitudinal direction were formed such that their directions are almost perpendicular to the maj or axis of a shape constituting the contour of the cross section, were inferior in durability to thermal shock and vibration in comparison with the honeycomb structured bodies according to the Examples. The reason for this is presumably because cracks occurred in the sealing material layers between the honeycomb units and the sealing material layer formed on the outer periphery thereof.

Moreover, in the honeycomb structured body according to Reference Example 1 in which the honeycomb unit has a cross-sectional area of less than 5 $cm^2$ (4 $cm^2$), the pressure loss was high in comparison with other honeycomb structured bodies according to the Examples.

In the honeycomb structured body according to Reference Example 2 in which the honeycomb unit has a cross-sectional area exceeding 50 $cm^2$ (55 $cm^2$), although the sealing material layers were formed diagonally, there was degradation in the durability against thermal shock and vibration in comparison with other honeycomb structured bodies according to the Examples. The reason for this is presumably because the honeycomb units were too large that they failed to sufficiently alleviate thermal shock imposed on the honeycomb unit.

Moreover, the honeycomb structured bodies according to the Examples make it possible to maintain a high specific surface area.

BRIEF DESCRIPTIONS OF THE DRAWINGS

Fig. 1(a) is a perspective view that schematically shows one example of a honeycomb structured body of the present invention, and Fig. 1(b) shows the major axis and the minor axis of the honeycomb structured body shown in Fig. 1(a).

Fig. 2(a) is a perspective view that schematically shows one example of a honeycomb unit that constitutes the honeycomb structured body of the present invention, and Fig. 2(b) is a cross-sectional view taken along line A-A of the honeycomb unit shown in Fig. 2(a).

Fig. 3 is a cross-sectional view that schematically shows a cross section perpendicular to the longitudinal direction of another example of the honeycomb structured body of the present invention.

Fig. 4 is a cross-sectional view that schematically shows a cross section perpendicular to the longitudinal direction of still another example of the honeycomb structured body of the present invention.

Fig. 5 is a cross-sectional view that schematically shows a cross section perpendicular to the longitudinal direction of yet another example of the honeycomb structured body of the present invention.

Fig. 6 is a cross-sectional view that schematically shows one example of an exhaust-gas conversion device for a vehicle, in which the honeycomb structured body of the present invention is installed.

Fig. 7 is a perspective view that schematically shows one example of a conventional honeycomb structured body.

Fig. 8(a) is a perspective view that schematically shows one example of a honeycomb unit that constitutes a conventional honeycomb structured body, and Fig. 8(b) is a cross-sectional view taken along line A-A of the honeycomb unit shown in Fig. 8(a).

Fig. 9 is a scanning electronic microscopic (SEM) photograph of a cell wall of the honeycomb unit in accordance with Example 1.

Fig. 10(a) is a front view that shows a vibration device used for a vibration test, and Fig. 10(b) is a side view of the vibration device.

Fig. 11 is a schematic diagram that shows a pressure-loss measuring device.

EXPLANATION OF SYMBOLS

10, 20, 30, 40, 50 Honeycomb structured body
11, 31, 41, 51 Sealing material layer
12, 32, 42, 52 Sealing material layer
33, 43, 53 Honeycomb unit
15 Honeycomb block
20 Honeycomb unit

21 Cell
23 Cell wall

**Claims**

1. A honeycomb structured body comprising:

   a honeycomb block which has a flat-shaped cross section and has a structure in which plural honeycomb units are bonded to one another through sealing material layers, each unit having in the longitudinal direction a large number of cells placed in parallel with a cell wall therebetween, and
   a sealing material layer provided on an outer peripheral portion of said honeycomb block,
   wherein
   each of said honeycomb units comprises inorganic fibers and/or whiskers in addition to inorganic particles, and said sealing material layer which is formed between said honeycomb units on the cross section perpendicular to the longitudinal direction is formed such that the direction thereof is diagonal to the major axis of a shape constituting the contour of said cross section.

2. The honeycomb structured body according to claim 1,
   wherein
   the cross-sectional area on a cross section perpendicular to the longitudinal direction of said honeycomb unit is 5 to 50 cm$^2$.

3. The honeycomb structured body according to claim 1 or 2,
   wherein
   the smaller of the angles of which the sealing material layer between said honeycomb units on the cross section perpendicular to the longitudinal direction and the major axis of the shape constituting the contour of the cross section make is within the range of 5 to 85°.

4. The honeycomb structured body according to any of claims 1 to 3,
   wherein
   the total sum of cross-sectional areas of said honeycomb units on the cross section perpendicular to the longitudinal direction accounts for 85% or more of the cross-sectional area of said honeycomb structured body on the cross section perpendicular to the longitudinal direction.

5. The honeycomb structured body according to any of claims 1 to 4,
   wherein
   said inorganic particles comprise of at least one member selected from the group consisting of alumina, silica, zirconia, titania, ceria, mullite and zeolite.

6. The honeycomb structured body according to any of claims 1 to 5,
   wherein
   said inorganic fibers and/or whiskers comprise of at least one member selected from the group consisting of alumina, silica, silicon carbide, silica-alumina, glass, potassium titanate and aluminum borate.

7. The honeycomb structured body according to any of claims 1 to 6, wherein
   said honeycomb unit is manufactured by using a mixture containing said inorganic fibers and/or whiskers in addition to said inorganic particles and an inorganic binder, and
   said inorganic binder comprises of at least one member selected from the group consisting of alumina sol, silica sol, titania sol, water glass, sepiolite and attapulgite.

8. The honeycomb structured body according to any of claims 1 to 7, on which a catalyst is supported.

9. The honeycomb structured body according to claim 8,
   wherein
   said catalyst contains at least one member selected from the group consisting of noble metal, alkali metal, alkaline earth metal and oxide.

**10.** The honeycomb structured body according to any of claims 1 to 9, which is used for exhaust gas conversion of a vehicle.

**Amended claims in accordance with Rule 86(2) EPC.**

**1.** A honeycomb structured body comprising:

a honeycomb block which has a flat-shaped cross section and has a structure in which plural honeycomb units are bonded to one another through sealing material layers, each unit having in the longitudinal direction a large number of cells placed in parallel with a cell wall therebetween, and
a sealing material layer provided on an outer peripheral portion of said honeycomb block,
wherein
said cells allow inflow and outflow of gas from the same cell,
each of said honeycomb units comprises inorganic fibers and/or whiskers in addition to inorganic particles, and
said sealing material layer which is formed between said honeycomb units on the cross section perpendicular to the longitudinal direction is formed such that the direction thereof is diagonal to the major axis of a shape constituting the contour of said cross section.

**2.** The honeycomb structured body according to claim 1,
wherein
the cross-sectional area on a cross section perpendicular to the longitudinal direction of said honeycomb unit is 5 to 50 $cm^2$.

**3.** The honeycomb structured body according to claim 1 or 2,
wherein
the smaller of the angles of which the sealing material layer between said honeycomb units on the cross section perpendicular to the longitudinal direction and the major axis of the shape constituting the contour of the cross section make is within the range of 5 to 85°.

**4.** The honeycomb structured body according to any of claims 1 to 3,
wherein
the total sum of cross-sectional areas of said honeycomb units on the cross section perpendicular to the longitudinal direction accounts for 85% or more of the cross-sectional area of said honeycomb structured body on the cross section perpendicular to the longitudinal direction.

**5.** The honeycomb structured body according to any of claims 1 to 4,
wherein
said inorganic particles comprise of at least one member selected from the group consisting of alumina, silica, zirconia, titania, ceria, mullite and zeolite.

**6.** The honeycomb structured body according to any of claims 1 to 5,
wherein
said inorganic fibers and/or whiskers comprise of at least one member selected from the group consisting of alumina, silica, silicon carbide, silica-alumina, glass, potassium titanate and aluminum borate.

**7.** The honeycomb structured body according to any of claims 1 to 6, wherein
said honeycomb unit is manufactured by using a mixture containing said inorganic fibers and/or whiskers in addition to said inorganic particles and an inorganic binder, and
said inorganic binder comprises of at least one member selected from the group consisting of alumina sol, silica sol, titania sol, water glass, sepiolite and attapulgite.

**8.** The honeycomb structured body according to any of claims 1 to 7, on which a catalyst is supported.

**9.** The honeycomb structured body according to claim 8,
wherein
said catalyst contains at least one member selected from the group consisting of noble metal, alkali metal, alkaline earth metal and oxide.

**10.** The honeycomb structured body according to any of claims 1 to 9, which is used for exhaust gas conversion of a vehicle.

Fig. 1

(a)

10

(b)

10

Major axis

Minor axis

20

11

12

15

Fig. 2

(a)

20

A

A

21

23

(b)

20

21

23

Cross-sectional view taken along line A-A

Fig. 3

Major axis

Fig. 4

Major axis

Fig. 5

Major axis

EP 1 736 220 A1

Fig. 6

Fig. 7

Fig. 8

(a)

(b)

Cross-sectional view taken along line A-A

Fig. 9

Fig. 10

(b)

(a)

Fig. 11

340

| Engine | | Honeycomb
structured body | |

Differential
pressure
gauge
ΔP

**European Patent Office**

**EUROPEAN SEARCH REPORT**

Application Number

EP 05 11 3035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DATABASE WPI<br>Section Ch, Week 199338<br>Derwent Publications Ltd., London, GB;<br>Class L02, AN 1993-299495<br>XP002382689<br>& JP 05 213681 A (KAWATA SEISAKUSHO KK)<br>24 August 1993 (1993-08-24)<br>* abstract * | 1-10 | INV.<br>B01D39/20<br>F01N3/28 |
| Y | EP 1 371 406 A (NGK INSULATORS, LTD)<br>17 December 2003 (2003-12-17)<br>* the whole document *<br>* figure 10 * | 1-10 | |
| Y | WO 2004/096414 A (NGK INSULATORS LTD;<br>MATSUBARA, REIJI; TOYOSHIMA, TETSUO)<br>11 November 2004 (2004-11-11)<br>* figures * | 1-10 | |
| | | | **TECHNICAL FIELDS SEARCHED (IPC)**<br>F01N |

The present search report has been drawn up for all claims

| Place of search | Date of completion of the search | Examiner |
|---|---|---|
| The Hague | 24 May 2006 | Plaka, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 11 3035

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2006

| Patent document cited in search report | | Publication date | Patent family member(s) | | Publication date |
|---|---|---|---|---|---|
| JP 5213681 | A | 24-08-1993 | NONE | | |
| EP 1371406 | A | 17-12-2003 | WO | 02076579 A1 | 03-10-2002 |
| | | | JP | 2002273130 A | 24-09-2002 |
| | | | US | 2004093858 A1 | 20-05-2004 |
| WO 2004096414 | A | 11-11-2004 | EP | 1618941 A1 | 25-01-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10263416 A
- JP 5213681 A
- JP 2002273130 A
- JP 2003260322 A
- WO 03078026 A1
- JP 2003181233 A